# EUROPEAN PATENT APPLICATION

(11) **EP 4 596 383 A1**
(43) Date of publication of application: **06.08.2025**
(21) Application number: 25153118.2
(22) Date of filing: 21.01.2025
(51) Int. Cl.: B62K 5/06, B62K 7/02

(54) **THREE WHEELED VEHICLE WITH ADJUSTABLE CARGO UNIT**

(30) Priority: 02.02.2024 TW 113104282
(71) Applicant: Rexon Industrial Corp. Ltd., Taichung 41279 (TW)
(72) Inventor: CHANG, Yao-Jen, Taichung 41279 (TW); CHEN, Jian-Dong, Taichung 41279 (TW)
(74) Representative: Stöckeler, Ferdinand

(57) **Abstract**

A wheeled vehicle includes a front vehicle unit (1) having a front wheel (12) rotatably mounted on a front frame (11) thereof, at least two rear vehicle units (2) connected with the front frame (11) and spaced apart from each other in a left-right direction (Y), and a cargo unit (5) disposed between the two rear vehicle units (2) and removably connected with the rear vehicle units (2). The two rear vehicle units (2) are rotatably connected with the front frame (11) or movably connected with the front frame (11) along the left-right direction (Y). Each rear vehicle unit (2) includes a rear frame (21) and a rear wheel (22) rotatably mounted on the rear frame (21). The wheeled vehicle is configured to be shiftable to reduce the space for storing and transporting the same.

## Description

The disclosure relates to a wheeled vehicle, and more particularly to a wheeled vehicle with a cargo unit.

A conventional cargo vehicle as disclosed in TWM555827 includes a front wheel unit, two rear wheel unit and a cargo container mounted between the rear wheel units. Such cargo vehicle is bulky, space-consuming, and is inconvenient to be carried. Another conventional cargo vehicle has a cargo container which is removably mounted on the rear vehicle frame. However, the distance between the rear wheel units along a left-right direction is constant, and hence it is difficult to reduce the storage space of the entire cargo vehicle.

Therefore, an object of the disclosure is to provide a wheeled vehicle with a cargo unit that can alleviate at least one of the drawbacks of the prior art.

According to an aspect of the disclosure, there is provided a wheeled vehicle according to claim 1.

Other features and advantages of the disclosure will become apparent in the following detailed description of the embodiments with reference to the accompanying drawings. It is noted that various features may not be drawn to scale.
FIG. 1 is an exploded perspective view illustrating an embodiment of a wheeled vehicle according to the disclosure.
FIG. 2 is an exploded perspective view of the embodiment taken from another angle.
FIG. 3 is a side view of the embodiment.
FIG. 4 is a fragmentary rear view of the embodiment, illustrating two rear vehicle units cooperating with a front vehicle unit of the wheeled vehicle to form a first vehicle configuration.
FIG. 5 is a sectional view taken along line V-V of FIG. 4.
FIG. 6 is a sectional view taken along line VI-VI of FIG. 4.
FIG. 7 is a fragmentary rear view similar to FIG. 4, illustrating the rear vehicle units cooperating with the front vehicle unit to form a second vehicle configuration.
FIG. 8 is a fragmentary perspective view of the embodiment, illustrating the rear vehicle units cooperating with the front vehicle unit to form a third vehicle configuration.
FIG. 9 is an exploded perspective view similar to FIG. 1, illustrating the rear vehicle units in a modified form.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

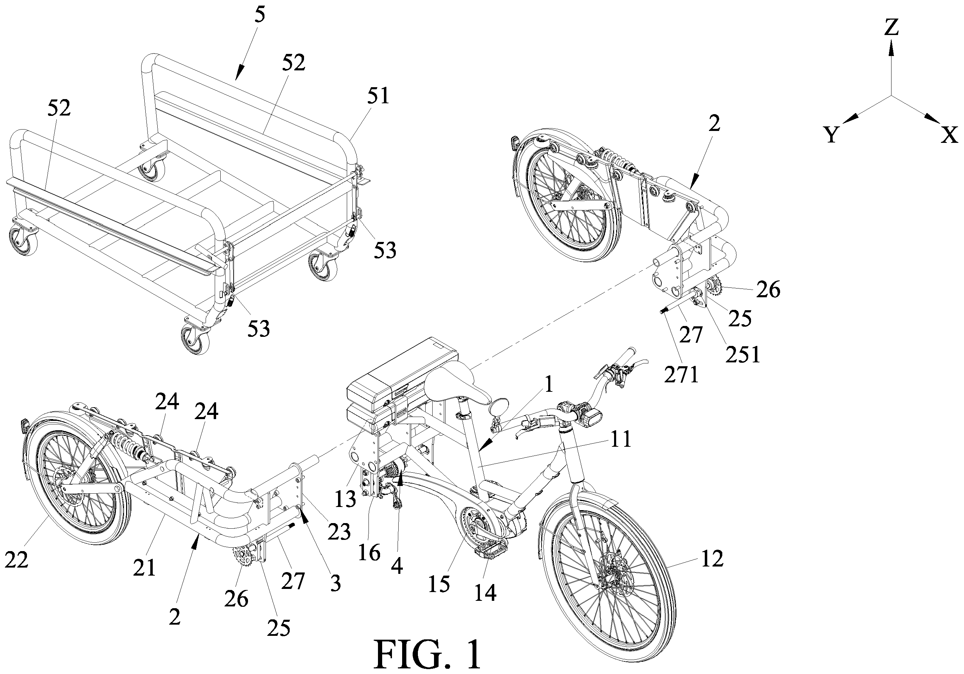

Referring to FIGS. 1 to 4, an embodiment of a wheeled vehicle according to the disclosure includes a front vehicle unit 1, two pairs of rear vehicle units 2, a plurality of fastener units 4, a drive transmitting unit 4 and a cargo unit 5.

The front vehicle unit 1 extends along a front-rear direction (X), and includes a front frame 11, a front wheel 12 rotatably mounted on the front frame 11, two abutment members 13 connected with the front frame 11 and spaced apart from each other in a left-right direction (Y), an operably driving wheel assembly 15 rotatably mounted on the front frame 11 and driven by two pedal cranks 14, and two front mounting plates 16 connected with the front frame 11. The front frame 11 has two front lower tubular pieces 111 extending along the left-right direction (Y) and aligned with each other along the front-rear direction (X), and a front upper tubular piece 112 extending along the left-right direction (Y) and above the front lower tubular pieces 111 in an up-down direction (Z). The abutment members 13 are connected with the front lower tubular pieces 111 and the front upper tubular piece 112, and are spaced apart from the front wheel 12 in the front-rear direction (X) (i.e., disposed rearwardly of the front wheel 12). Each of the two front mounting plates 16 has an arcuate slot 161 which is arcuate in both of the up-down direction (Z) and the front-rear direction (X).

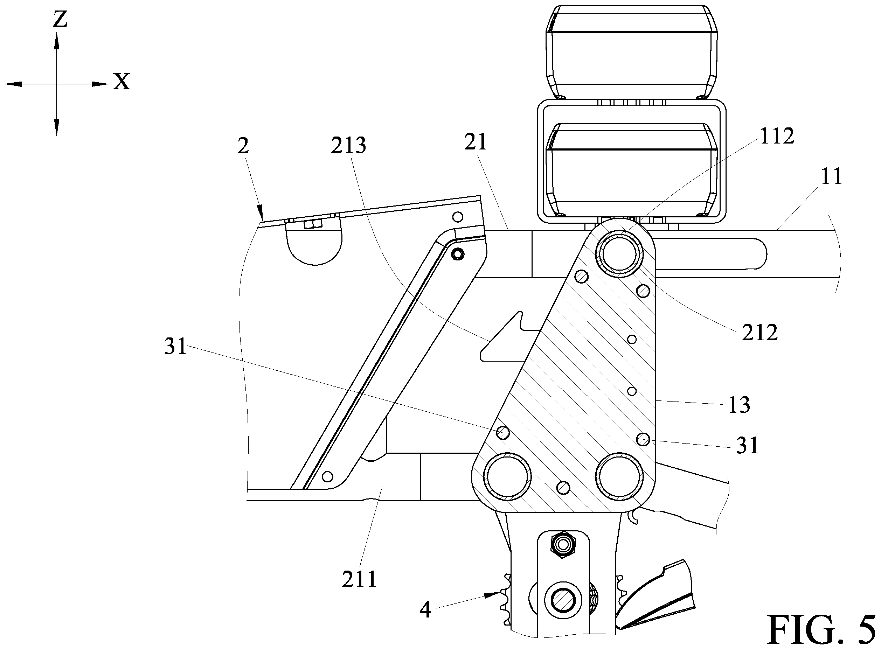

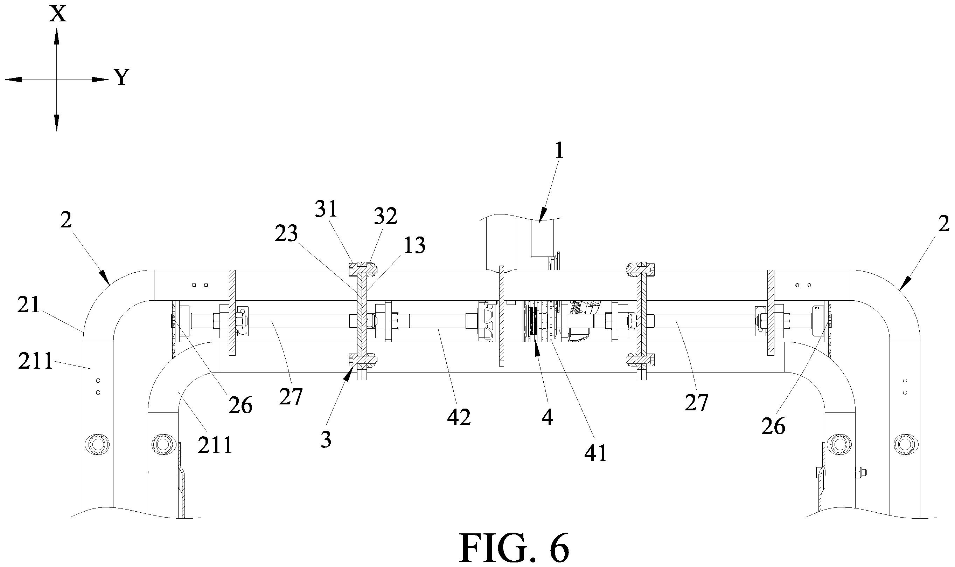

With reference to FIGS. 1, 2, 5 and 6, the two pairs of the rear vehicle units 2 are removably connected with the front frame 11, and the rear vehicle units 2 of each pair are spaced apart from each other in the left-right direction (Y). Specifically, each rear vehicle unit 2 includes a rear frame 21, a rear wheel 22 rotatably mounted on the rear frame 21, an abutting member 23 connected with the rear frame 21 and in abutting engagement with a corresponding one of the abutment members 13 of the front vehicle unit 1, a plurality of engaging roller assemblies 24 rollably mounted on an inner side of the rear frame 21 and arranged along the front-rear direction (X), a rear mounting plate 25 connected with the rear frame 21 and having an arcuate slot 251, a driven wheel 26 rotatably mounted on the rear mounting plate 25 or the rear frame 21 and coupled with the rear wheel 22 to rotate the rear wheel 22, and a driven axle 27 disposed to rotate the driven wheel 26 and extending along the left-right direction (Y). The rear frame 21 has two rear lower tubular pieces 211 which extend parallel to each other, a rear upper tubular piece 212 which has a tubular end extending along the left-right direction (Y) and disposed above the rear lower tubular pieces 211, and an anchored member 213 which is connected with the rear upper tubular piece 212. In the embodiment, the rear upper tubular piece 212 is rotatably sleeved on the front upper tubular piece 112 along the left-right direction (Y). The abutting member 23 is connected with the rear upper tubular piece 212 and the rear lower tubular pieces 211, and is spaced apart from the rear wheel 22 in the front-rear direction (X) (i.e., disposed forwardly of the rear wheel 22). The driven axle 27 extends through the arcuate slot 251 of the rear mounting plate 25 to permit movement of the driven wheel 26 along the arcuate slot 251 in the up-down direction (Z) and the front-rear direction (X). The driven axle 27 has a non-circular end portion 271.

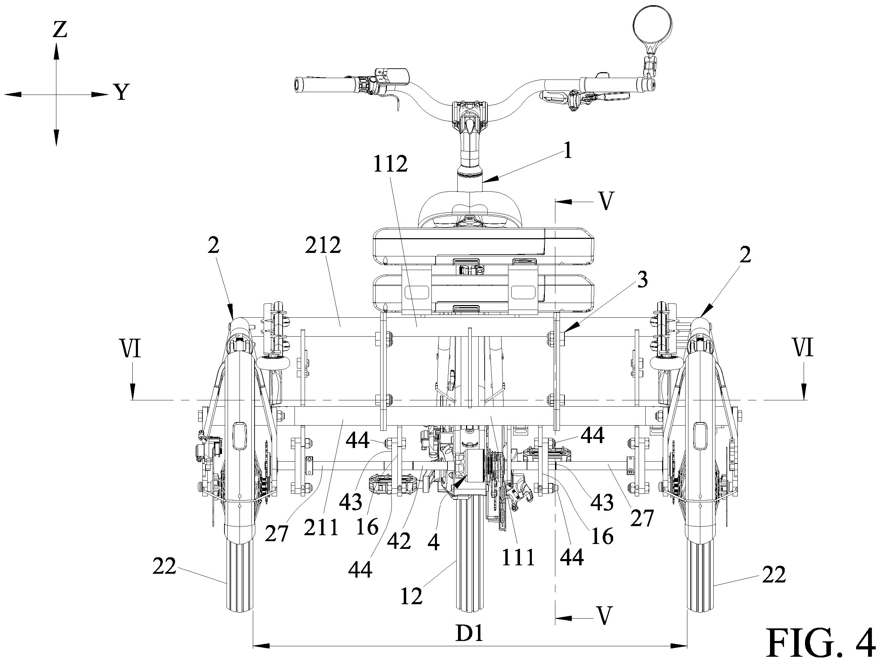

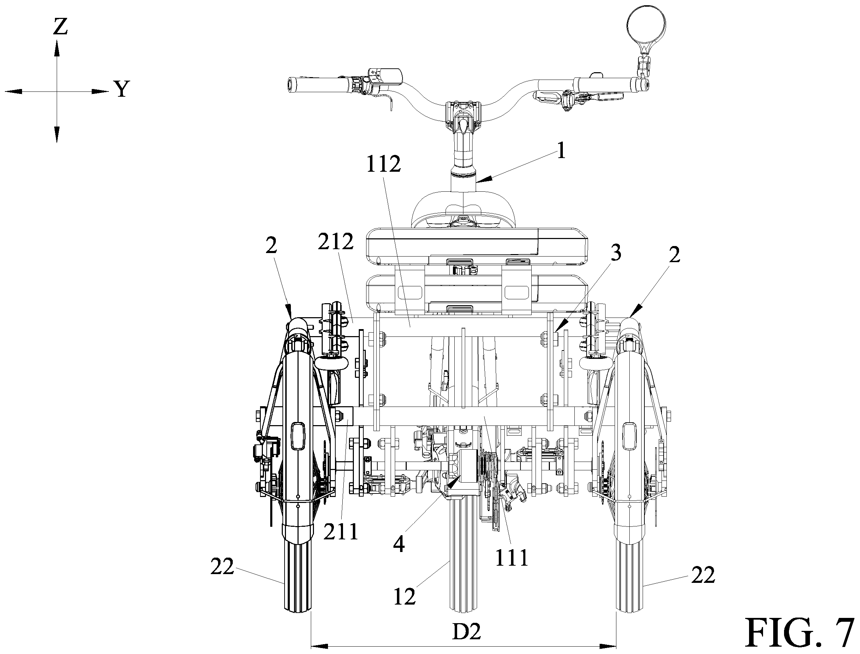

The rear vehicle units 2 of one pair are spaced apart from each other in the left-right direction (Y) by a distance (D1) between the rear wheels 22 thereof, and are configured to cooperate with the front vehicle unit 1 to form a first vehicle configuration, as shown in FIG. 4. The rear vehicle units 2 of another pair are spaced apart from each other in the left-right direction (Y) by a distance (D2) between the rear wheels 22 thereof, and are configured to cooperate with the front vehicle unit 1 to form a second vehicle configuration, as shown in FIG. 7. In the first vehicle configuration or the second vehicle configuration, the two rear vehicle units 2 are disposed opposite to the front vehicle unit 1 along the front-rear direction (X). The distance (D1) in the first vehicle configuration is greater than the distance (D2) in the second vehicle configuration. That is to say, the lengths of the rear lower tubular pieces 211 and the rear upper tubular piece 212 of the two rear frames 21 in the first vehicle configuration in FIG. 4 are different from those in the second vehicle configuration in FIG. 7.

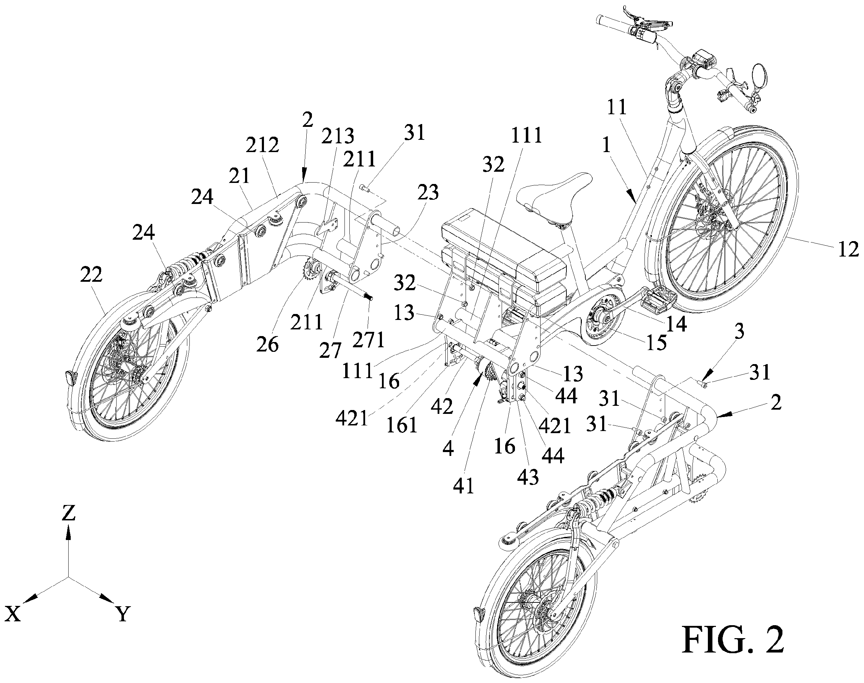

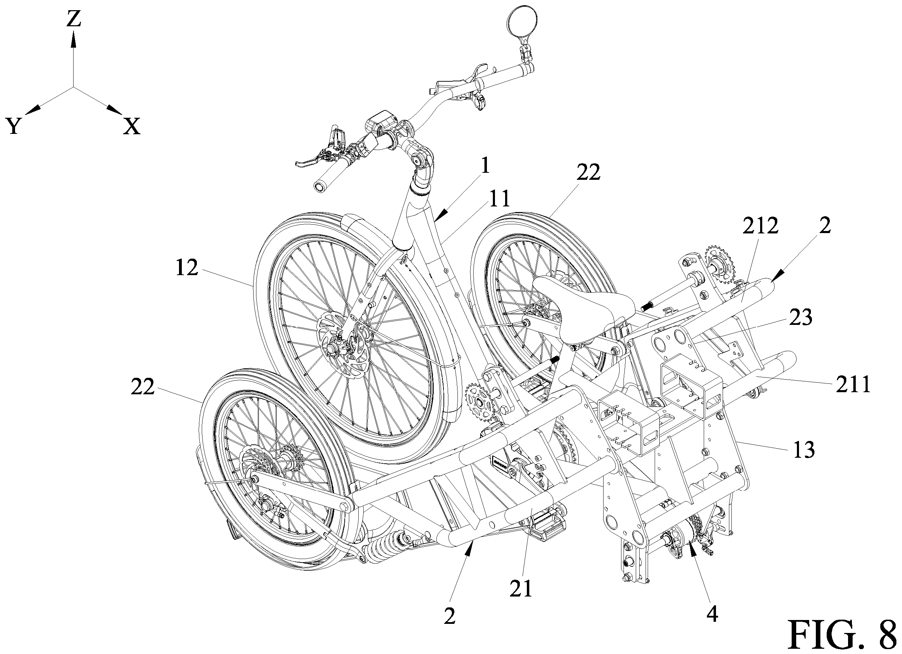

With reference to FIGS. 2, 5 and 8, the two rear vehicle units 2 of each pair are rotatably connected with the front frame 11 with the rear upper tubular pieces 212 rotatably sleeved on the front upper tubular piece 112 about a pivot axis that extends in the left-right direction (Y), and are configured to cooperate with the front vehicle unit 1 to form a third vehicle configuration. In the third vehicle configuration, the two rear vehicle units 2 extend in an extension direction which is the same direction as that of the front vehicle units 1, and are respectively disposed at left and right sides of the front vehicle unit 1 along the left-right direction (Y).

With reference to FIG. 2 and FIGS. 4 to 6, in the embodiment, each of the fastener units 3 includes a threaded bolt 31 extending through the abutting member 23 and the corresponding one of the abutment members 13, and a threaded nut 32 threadedly engaged with the threaded bolt 31 to removably secure the abutting member 23 to the corresponding one of the abutment members 13 so as to securely connect the rear vehicle units 2 with the front vehicle unit 1.

The drive transmitting unit 4 is movably mounted on the front mounting plates 16 by moving along the arcuate slots 161 of the front mounting plates 16 in the up-down direction (Z) and the front-rear direction (X), and includes a synchronizing wheel assembly 41 which is coupled with and rotatable with the operably driving wheel assembly 15, and a synchronizing axle 42 which is driven by and rotates with the synchronizing wheel assembly 41 to make the rear wheels 22 rotate in a synchronizing manner. Specifically, the synchronizing axle 42 extends along the left-right direction (Y) through the arcuate slots 161 of the front mounting plates 16 to be permitted for movement along the arcuate slots 161, and has two ends 421 formed with non-circular holes in a spline engagement with the end portions 271 of the driven axles 27 so as to be coaxially connected with the driven axles 27. The drive transmitting unit 4 has two locking plates 43 respectively mounted on the front mounting plates 16 for the synchronizing axle 42 to extend therethrough, and a plurality of fasteners 44 fastening the locking plates 43 on the front mounting plates 16 to retain the synchronizing axle 42 to the locking plates 43.

The cargo unit 5 is disposed between the corresponding two rear vehicle units 2, and is removably connected with the rear vehicle units 2. The cargo unit 5 includes a container 51, two slide rails 52 mounted on the container 51 and slidably and removably engaged with the engaging roller assemblies 24, and two anchoring members 53 connected with the container 51 and removably anchoring the anchored members 213. For example, the container 51 is in the form of a rack, a bracket, a substrate, a trailer, etc. Since the mounting construction of the cargo unit 5 with the rear vehicle units 2 is of various known types, a detailed description thereof is omitted.

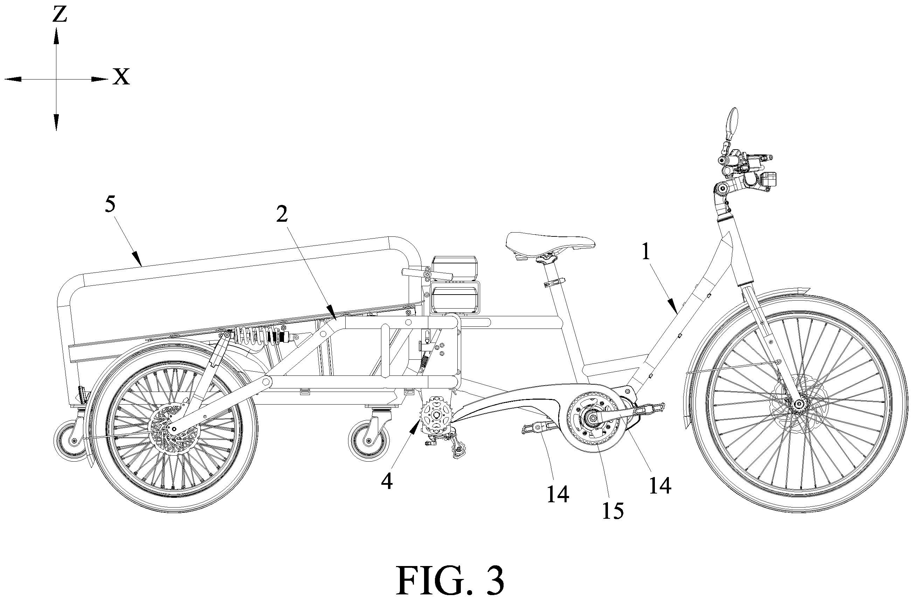

As shown in FIGS. 3 and 4, when the rear vehicle units 2 of the one pair are connected with the front vehicle unit 1 to cooperatively form the first vehicle configuration with the distance (D1) (i.e., a larger distance) between the rear vehicle units 2, a container 51 having a larger width along the left-right direction (Y) may be mounted between the rear vehicle units 2. As shown in FIGS. 3 and 7, when the rear vehicle units 2 of the another pair are connected with the front vehicle unit 1 to cooperatively form the second vehicle configuration with the distance (D2) (i.e., a smaller distance) between the rear vehicle units 2, a container 51 having a smaller width along the left-right direction (Y) may be mounted between the rear vehicle units 2, and an entire width of the wheeled vehicle along the left-right direction (Y) may be reduced. As shown in FIGS. 2, 5 and 8, when the rear upper tubular pieces 212 of the rear vehicle units 2 are rotated relative to the front frame 11 to switch the wheeled vehicle from one of the first vehicle configuration and the second vehicle configuration to the third vehicle configuration, the length of the wheeled vehicle along the front-rear direction (X) is reduced for facilitating storage and carriage of the same.

With reference to FIGS. 2, 5, 6 and 8, when assembling or disassembling the rear vehicle units 2, by loosening or tightening the threaded nuts 32, the rear vehicle units 2 are assembled to or disassembled from the front vehicle unit 1 by the threaded bolts 31. Thus, the rear vehicle units 2 of the two pairs may be selectively connected with the front vehicle unit 1 to cooperatively form one of the first vehicle configuration and the second vehicle configuration, and switchable between the first vehicle configuration and the third vehicle configuration, or between the second vehicle configuration and the third vehicle configuration.

Alternatively, in other embodiments, the rear vehicle units 2 may be non-removably and rotatably connected with the front frame 11 so as to permit switching between one of the first and second vehicle configurations and the third vehicle configuration.

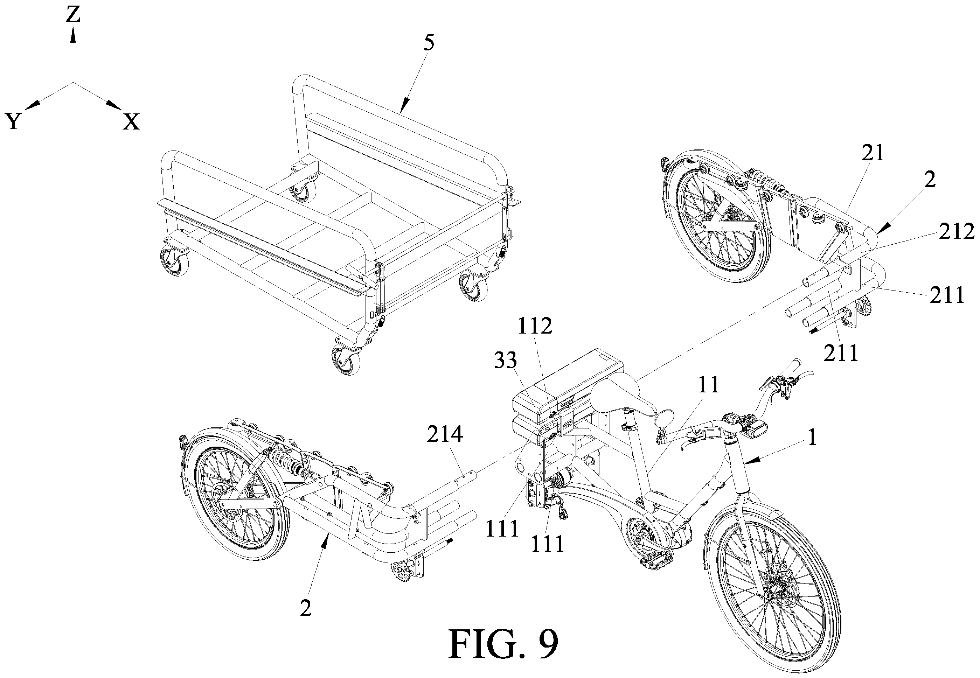

It is noted that the number of the rear vehicle units 2 is not limited to four. In other embodiments, as shown in FIG. 9, the wheeled vehicle includes two rear vehicle units 2. Each of the rear vehicle units 2 has a rear upper tubular piece 212 and two rear lower tubular pieces 211 which are respectively and movably sleeved on the front upper tubular piece 112 and the two front lower tubular pieces 111 in the left-right direction (Y). Thus, the rear vehicle units 2 are adjustably movable along the left-right direction (Y) to be spaced apart from each other by the distance (D1) or the distance (D2) such that the wheeled vehicle is switchable between the first vehicle configuration and the second vehicle configuration.

Moreover, in other embodiments, as shown in FIG. 9, two fasteners 33 are disposed on the front upper tubular piece 112 of the front frame 11. The rear upper tubular piece 212 of each rear frame 21 has a plurality of holes 214 aligned in the left-right direction (Y). Thus, each of the fasteners 33 is releasably engaged with a selected one of the holes 214 of the rear upper tubular piece 212 to fasten the rear frame 21 to the front frame 11.

As illustrated, with the rear vehicle units 2 movably connected with the front vehicle unit 1, the wheeled vehicle is configured to be switchable between the first vehicle configuration and the second vehicle configuration for accommodating the containers 51 of different widths, and is configured to be switchable to the third vehicle configuration to reduce the space for carrying and storing the same. Moreover, with the driven axles 27 in spline engagement with the synchronizing axle 42, the driven wheels 26 are rotated with the synchronizing wheel assembly 41 to synchronously rotate the rear wheels 22. Furthermore, the drive transmitting unit 4 and the driven axles 27 are movable in the front-rear direction (X) and the up-down direction (Z) to adjust the connection position of the drive transmitting unit 4 with the driven axles 27 so as to improve centering and accuracy of the drive transmitting unit 4 and the driven axles 27.

## Claims

1. A wheeled vehicle comprising:
a front vehicle unit (1) extending along a front-rear direction (X), and including a front frame (11) and a front wheel (12) rotatably mounted on said front frame (11);
at least two rear vehicle units (2) spaced apart from each other in a left-right direction (Y); and
a cargo unit (5) disposed between said at least two rear vehicle units (2) and removably connected with said at least two rear vehicle units (2), **characterized in that**:
said at least two rear vehicle units (2) being either rotatably connected with said front frame (11), or movably connected with said front frame (11) along the left-right direction (Y), and each of said at least two rear vehicle units (2) includes a rear frame (21) and a rear wheel (22) rotatably mounted on said rear frame (21).

2. The wheeled vehicle of claim 1, wherein said at least two rear vehicle units (2) are spaced apart from each other in the left-right direction (Y) by a distance (D1, D2), and are configured to cooperate with said front vehicle unit (1) to form a first vehicle configuration and a second vehicle configuration, wherein, in said first vehicle configuration or said second vehicle configuration, said at least two rear vehicle units (2) are disposed opposite to said front vehicle unit (1) along the front-rear direction (X), and wherein said distance (D1) between said at least two rear vehicle units (2) in said first vehicle configuration is greater than said distance (D2) between said at least two rear vehicle units (2) in said second vehicle configuration.

3. The wheeled vehicle of claim 1 or claim 2, wherein each of said at least two rear vehicle units (2) is rotatably connected with said front frame (11) about a pivot axis that extends in the left-right direction (Y), and said at least two rear vehicle units (2) are configured to cooperate with said front vehicle unit (1) to form a third vehicle configuration, wherein, in said third vehicle configuration, said at least two rear vehicle units (2) extend in an extension direction which is same as an extension direction of said front vehicle units (1), and are respectively disposed at left side and right side of said front vehicle unit (1) along the left-right direction (Y).

4. The wheeled vehicle of claim 2, comprising two pairs of said rear vehicle units (2), wherein said rear vehicle units (2) of each pair are spaced apart from each other by said distance (D1, D2), and are removably connected with said front frame (1), and wherein said distance (D1) between said rear vehicle units (2) of one pair is greater than said distance (D2) between said rear vehicle units (2) of another pair.

5. The wheeled vehicle of claim 4, wherein said front vehicle unit (1) further includes two abutment members (13) which are connected with said front frame (11) and spaced apart from each other in the left-right direction (Y), said abutment members (13) being spaced apart from said front wheel (12) in the front-rear direction (X), each of said rear vehicle units (2) further including an abutting member (23) which is connected with said rear frame (21) and in abutting engagement with a corresponding one of said abutment members (13), said abutting member (23) being spaced apart from said rear wheel (22) in the front-rear direction (X).

6. The wheeled vehicle of claim 5, further comprising a plurality of fastener units (3) each of which includes a threaded bolt (31) extending through said abutting member (23) and said corresponding one of said abutment members (13), and a threaded nut (32) threadedly engaged with said threaded bolt (31) to removably secure said abutting member (23) to said corresponding one of said abutment members (13).

7. The wheeled vehicle of claim 5, wherein said rear vehicle units (2) of each pair are configured to cooperate with said front vehicle unit (1) to form a third vehicle configuration, wherein, in said third vehicle configuration, said rear vehicle units (2) of each pair extend in an extension direction which is same as an extension of of said front vehicle units (1), and are respectively disposed at left side and right side of said front vehicle unit (1) along the left-right direction (Y), said front frame (11) of said front vehicle unit (1) having a front upper tubular piece (112) which extends along the left-right direction (Y), said rear frame (21) of each of said rear vehicle units (2) having two rear lower tubular pieces (211) which extend parallel to each other, and a rear upper tubular piece (212) which has a tubular end extending along the left-right direction (Y) to be sleeved on said front upper tubular piece (112) along the left-right direction (Y) such that said rear upper tubular piece (212) is rotatable relative to said front frame (11) to switch said wheeled vehicle between said first vehicle configuration and said third vehicle configuration, or between said second vehicle configuration and said third vehicle configuration.

8. The wheeled vehicle of claim 2, wherein said front frame (11) of said front vehicle unit (1) has two front lower tubular pieces (111) extending along the left-right direction (Y) and aligned with each other along the front-rear direction (X), and a front upper tubular piece (112) which extends along the left-right direction (Y) and above said front lower tubular pieces (111), said rear frame (21) of each of said at least two rear vehicle units (2) having two rear lower tubular pieces (211) which extend parallel to each other, and a rear upper tubular piece (212) which is disposed above said rear lower tubular pieces (211), said rear upper tubular piece (212) and said two rear lower tubular pieces (211) being respectively and movably sleeved on said front upper tubular piece (112) and said two front lower tubular pieces (111) in the left-right direction (Y) such that said wheeled vehicle is switchable between said first vehicle configuration and said second vehicle configuration.

9. The wheeled vehicle of claim 8, further comprising two fasteners (33) disposed on said front upper tubular piece (112) and respectively and releasably engaged with said rear upper tubular pieces (212) of said at least two rear vehicle units (2) so as to fasten said rear frames (21) to said front frame (11).

10. The wheeled vehicle of claim 1, further comprising a drive transmitting unit (4) mounted on said front frame (11), said front vehicle unit (1) further including an operably driving wheel assembly (15), said drive transmitting unit (4) including a synchronizing wheel assembly (41) which is coupled with and rotatable with said operably driving wheel assembly (15), and a synchronizing axle (42) which is driven by and rotated with said synchronizing wheel assembly (41) to make said rear wheels (22) rotate in a synchronizing manner.

11. The wheeled vehicle of claim 10, wherein each of said at least two rear vehicle units (2) further includes a driven wheel (26) which is rotatably mounted on said rear frame (21) and coupled with said rear wheel (22) to rotate said rear wheel (22), and a driven axle (27) which is disposed to rotate said driven wheel (26) and which extends along the left-right direction (Y) and has an end portion (271) in a spline engagement with an end (421) of said synchronizing axle (42) so as to be coaxially connected with said synchronizing axle (42).

12. The wheeled vehicle of claim 11, wherein said front vehicle unit (1) further includes two front mounting plates (16) which are connected with said front frame (11), each of said two front mounting plates (16) having an arcuate slot (161), said synchronizing axle (42) extending through said arcuate slots (161) of said two front mounting plates (16) to be permitted for movement along said arcuate slots (161) in an up-down direction (Z) and the front-rear direction (X), each of said at least two rear vehicle units (2) further including a rear mounting plate (25) which is connected with said rear frame (21) and has an arcuate slot (251), said driven axle (27) extending through said arcuate slot (251) of said rear mounting plate (25) to be permitted for movement along said arcuate slot (251) in the up-down direction (Z) and the front-rear direction (X) such that said drive transmitting unit (4) is movably mounted on said front mounting plates (16) by moving along said arcuate slots (161) of said front mounting plates (16) in the up-down direction (Z) and the front-rear direction (X).
